(19) **Europäisches Patentamt**

**European Patent Office**

**Office européen des brevets**

(11) Veröffentlichungsnummer: **0 207 218 B1**

(12) **EUROPÄISCHE PATENTSCHRIFT**

(45) Veröffentlichungstag der Patentschrift: **19.12.90**

(51) Int. Cl.⁵: **G 01 D 5/20**

(21) Anmeldenummer: **86102786.0**

(22) Anmeldetag: **04.03.86**

(54) Ansteuerschaltung für einen induktiven Sensor.

(30) Priorität: **04.06.85 DE 3519978**

(43) Veröffentlichungstag der Anmeldung:
**07.01.87 Patentblatt 87/02**

(45) Bekanntmachung des Hinweises auf die
Patenterteilung:
**19.12.90 Patentblatt 90/51**

(84) Benannte Vertragsstaaten:
**DE FR GB IT NL SE**

(56) Entgegenhaltungen:
**EP-A-0 082 772**
**DE-A-2 810 144**
**DE-A-3 343 885**
**US-A-4 083 237**

(73) Patentinhaber: **WABCO Westinghouse
Fahrzeugbremsen GmbH
Am Lindener Hafen 21 Postfach 91 12 80
D-3000 Hannover 91 (DE)**

(72) Erfinder: **Gudat, Wolfgang, Dipl.-Ing.
Kammstrasse 6
D-3016 Seelze 7 (DE)**
Erfinder: **Meyer, Dietmar, Dipl.-Ing.
Egestorfer Strasse 65
D-3013 Barsinghausen (DE)**

(74) Vertreter: **Schrödter, Manfred
WABCO Westinghouse Fahrzeugbremsen
GmbH Am Lindener Hafen 21 Postfach 91 12 80
D-3000 Hannover 91 (DE)**

**Beschreibung**

Die Erfindung bezieht sich auf eine Ansteuerschaltung für einen induktiven Sensor gemäß dem Oberbegriff des Patentanspruchs 1.

Mit einem solchen Sensor kann z.B. ein Weg gemessen werden. Bekannt sind Ausführungen, in denen ein Eisenkern in eine Spule einschiebbar ist. Die hierdurch vergrößerte Induktivität der Spule wird mittels einer geeigneten elektrischen Schaltung erfaßt und ausgewertet (DE—A—33 43 885).

In der o.e. bekannten Schaltung, von der die Erfindung ausgeht, wird die Spule während eines Meßvorganges an eine Konstantspannungsquelle angelegt. Hierzu ist der Spule ein strombegrenzender Schalter vorgeschaltet. Der Spulenstrom steigt dann bis zum Einsatz der Strombegrenzung an. Die Zeit vom Beginn des Spannungsimpulses bis zum Einsatz der Strombegrenzung wird durch einen Mikrocomputer ausgewertet. Sie ist ein Maß für die Induktivität der Spule bzw. für den Weg des Eisenkerns.

Es hat sich nun in Versuchen herausgestellt, daß die Meßgenauigkeit der bekannten Anordnung den Anforderungen nicht in allen Fällen genügt. Insbesondere kann sich eine unerwünschte Temperaturabhängigkeit der Messung durch den im Stromkreis liegenden steuerbaren strombegrenzenden Schalter, der im allgemeinen Halbleiter enthält, zeigen.

Zur Ausschaltung von Temperatur-Einflüssen, die sich negativ auf die Meßgenauigkeit auswirken, ist bereits bekannt (US—A—40 83 237), einen induktiven Wegsensor mit einer auf einem konstanten Wert geregelten Eingangsspannung zu versorgen. Diese Schrift offenbart einen Sensor mit Differential-Transducer, der von einem Oszillator mit einer Wechselspannung konstanter Frequenz gespeist wird. Sie fällt daher nicht unter die eingangs genannte Gattung der Erfindung.

Der Erfindung liegt die Aufgabe zugrunde, eine Ansteuerschaltung für einen induktiven Sensor der eingangs genannten Art so auszubilden, daß die Meßgenauigkeit erhöht und insbesondere die Temperaturabhängigkeit verringert wird.

Diese Aufgabe wird durch die im Patentanspruch 1 enthalten Erfindung gelöst.

Die abhängigen Ansprüche enthalten zweckmäßige Weiterbildungen der Erfindung.

Die Erfindung wird im folgenden anhand einer Zeichnung näher erläutert.

Diese zeigt in

Fig. 1 eine Ansteuerschaltung für einen induktiven Sensor nach der Erfindung

Fig. 2a bis 2d zugehörige Diagramme der auftretenden Ströme und Spannungen über die Zeit.

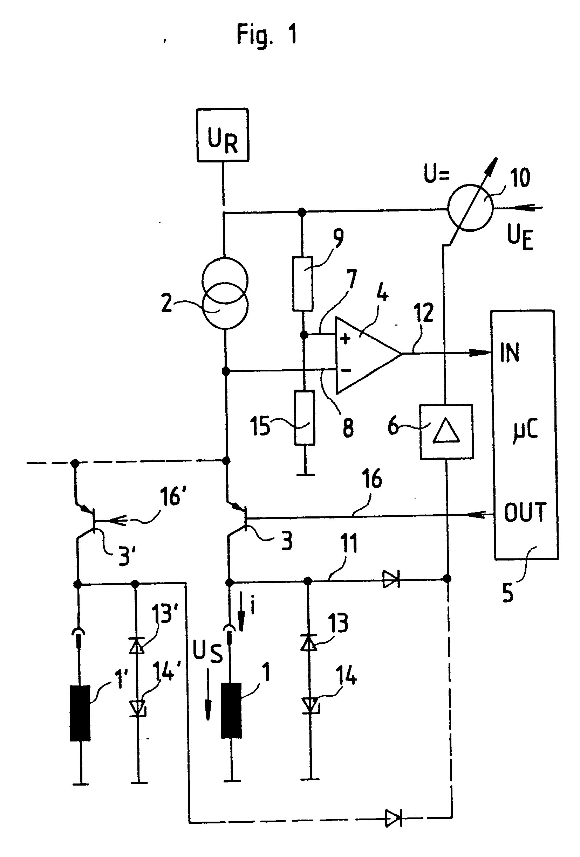

Die in Fig. 1 dargestelle erfindungsgemäße Schaltung hat den Zweck, einen induktiven Sensor 1 mit einer Meß-Spannung zu beaufschlagen, wobei der dabei entstehende Strom infolge einer Strombegrenzung 2 nur auf einen festen Wert ansteigen kann. Die Zeit vom Einschalten der Meß-Spannung bis zum Einsatz der Strombegrenzung wird durch einen Mikrocomputer 5 gemessen und in den auszuwertenden Weg umgerechnet.

Die Schaltung gemäß Fig. 1 besteht aus einer Spannungsquelle 10, die an eine Eingangsspannung $U_E$ von etwa 18 bis 30 V angeschlossen ist. Die Ausgangsspannung der Spannungsquelle 10 ist durch einen Regler 6 regelbar. Sie wird als Regelspannung $U_R$ beziechnet.

Die Spannungsquelle 10 ist an eine Strombegrenzung 2 angeschlossen. Hier wird der Strom auf einen maximalen Wert von $I_{max}$ begrenzt. Die Strombegrenzung 2 ist über einen Schalter 3, der als Transistor ausgebildet ist, an den induktiven Sensor 1 angeschlossen. Durch den Sensor 1 fließt der Strom i, und es fällt eine Spannung $U_S$ ab.

Der Schalter 3 (Basisanschluß) wird über eine Leitung 16 vom Mikrocomputer 5 angesteuert (Ausgang OUT). Die Spannung $U_S$ am Sensor 1 wird über eine Leitung 11 und den Regler 6 zum Steuereingang der Spannungsquelle 10 zurückgeleitet. Hierdurch wird die Spannung $U_S$ am Sensor 1 auf einen konstanten Wert geregelt.

Es ist weiter ein Komparator 4 vorgesehen, dessen Ausgang über eine Leitung 12 mit einem Eingang (IN) des Mikrocomputers 5 verbunden ist. Der nicht invertierte Eingang 7 des Komparators 4 ist über einen Spannungsteiler 9, 15 an die Regelspannung $U_R$ angeschlossen.

Der zweite, invertierte Eingang 8 des Komparators 4 ist an den Ausgang der Strombegrenzung 2 angeschlossen.

Zur Aufnahme der Abschalt-Spannungsspitze am Sensor 1 dient eine Abschaltbegrenzung, die aus einer Zenerdiode 14 und einer entgegengesetzt gepolten Diode 13 besteht, und parallel zum Sensor 1 geschaltet ist.

Anstelle des Mikrocomputers 5 kann auch eine andere, zeitmessende Schaltung vorgesehen sein. Als Strombegrenzung 2 und als Spannungsquelle 10 kann jeweils eine Schaltung mit dem gleichen IC, z.B. der Typ LM 317 der Firma National Semi Conductor, eingesetzt werden.

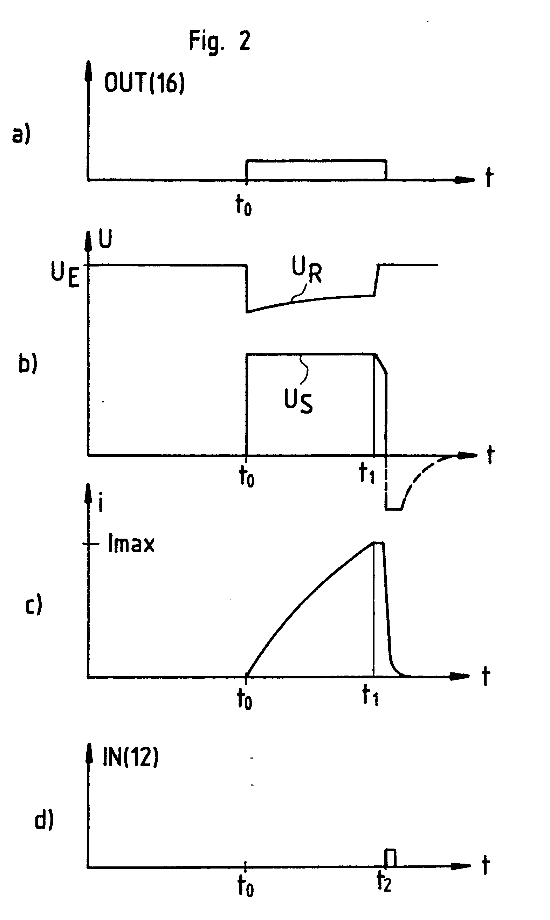

Im folgenden wird die Funktionsweise der Schaltung in Verbindung mit den Diagrammen der Fig. 2 näher erläutert.

Gemäß Fig. 2a gibt der Mikrocomputer 5 über die Leitung 16 (OUT) ein Meßsignal ab, das zum Zeitpunkt $t_0$ beginnt. Hierdurch wird der Schalter 3 geöffnet, und die Spannung $U_S$ am Sensor 1 steigt auf einen konstanten, durch die Spannungsquelle 10 geregelten Wert an. Da mit steigendem Strom i durch den Sensor 1 die Spannungsabfälle in der Strombegrenzung 2 und im Schalter 3 ansteigen, muß zur Kompensation dieser Spannungsabfälle die Regelspannung $U_R$ am Ausgang der Spannungsquelle 10 ebenfalls ansteigen.

Im Ruhezustand vor dem Zeitpunkt $t_0$ ist der Wert der Regelspannung $U_R$ etwa gleich dem Wert der Eingangsspannung $U_E$ (vergleiche Fig. 2b).

Ab dem Zeitpunkt $t_0$ steigt der Sensorstrom i gemäß einer e-Funktion an (Fig. 2c). Im Zeitpunkt $t_1$ ist der Wert $I_{max}$ erreicht, und die Strombegren-

zung 2 beginnt, den Strom i auf den Wert $I_{max}$ zu begrenzen. Da der selbstinduzierte Anteil der Spannung $U_S$ am Sensor 1 proportional der Ableitung des Stromes i ist, sinkt die Spannung $U_S$ mit Einsetzen der Strombegrenzung zum Zeitpunkt $t_1$ auf den Wert $I_{max} \cdot R_{sensor}$.

Da die Strombegrenzung 2 eine endliche Verstärkung aufweist, geht die Spannung $U_S$ nicht schlagartig auf diesen Wert. Es handelt sich um einen Regelvorgang, der im Mikrosekundenbereich liegt.

Wenn die Spannung $U_S$ absinkt, geht die Regelspannung $U_R$ wieder auf den Wert $U_E$ hoch.

Der erfolgte Einsatz der Strombegrenzung wird von der Schaltung nach Fig. 1 mit Hilfe des Komparators 4 erkannt. Dieser vergleicht mit dem Eingang 8 eine Spannung, die etwa der Sensorspannung $U_S$ entspricht, mit einer zweiten Spannung (Eingang 7), die der Regelspannung $U_R$ entspricht. Wie aus Fig. 2b hervorgeht, driften diese beiden Spannungen im Anschluß an $t_1$ stark auseinander. Dieses Auseinanderdriften wird vom Komparator 4 erkannt, der daraufhin über die Leitung 12 einen Ausgangsimpuls auf den Eingang IN des Mikrocomputers 5 gibt (siehe Fig. 2d). Dieser Impuls erfolgt zum Zeitpunkt $t_2$ und bewirkt einen Interrupt des Mikrocomputers 5. Der Mikrocomputer verzweigt in seinem Programm an eine Programmstelle, in dem der Meßwert, d.h. die verstrichene Zeit von den Zeitpunkten $t_0$ bis $t_2$, abgespeichert wird. Diese Meßwert ist ein Maß für die Induktivität des Sensors 1 und damit für den Weg des Eisenkerns des Sensors.

Im Anschluß an $t_2$ wird die im Sensor 1 gespeicherte magnetische Energie über die aus den beiden Dioden 14 und 13 bestehende Abschaltbegrenzung vernichtet. Hier-bei entsteht eine Abschaltspannung (siehe Fig. 2a), deren Maximum vom Wert der Zenerdiode 14 bestimmt wird. Hierdurch wird der Abschaltvorgang in an sich bekannter Weise beschleunigt, so daß die Anordnung im Anschluß daran für eine neue Messung bereit steht.

Die Anordnung nach Fig. 1 ist auch zum Anschluß mehrerer Sensoren geeignet. Hierzu müssen lediglich der Sensor 1', der Schalter 3' und die Abschaltbegrenzung 13', 14' entsprechend mehrfach vorgesehen werden. Durch Anschluß der Leitungen 16' an verschiedene Ausgänge des Mikrocomputers 5 lassen sich die einzelnen Sensoren in gewünschter Reihenfolge nacheinander ansteuern bzw. abfragen. Der Hauptteil der Schaltung nach Fig. 1 braucht nur einmal vorgesehen zu werden.

Ein besonderer Vorteil der erfindungsgemäßen Schaltung liegt darin, daß beim Einsatz der Strombegrenzung das Bezugspotential des Komparators 4 am nichtinvertierten Eingang 7 angehoben wird, wodurch das Umschalten des Komparators 4 beschleunigt wird. Hierdurch wird die Zeit von $t_1$ bis $t_2$ biz zum Interrupt des Mikrocomputers 5 verringert. Durch die gegenläufige Spannungsänderung in den Eingängen 7, 8 des Komparators 4 wird also der Einsatz der Strombegrenzung 2 besonders schnell erkannt. Hierdurch steigt die Genauigkeit der Wegmessung.

Da als Meßgröße wie oben angegeben die Zeit zwischen Einschalten des Sensorstromes i und Erzeugen des Interrupts ($t_2$) dient, diese Zeit jedoch vom Absolutwert der angelegten Sensorspannung $U_S$ abhängig ist, bringt die erfindungsgemäße Stabilisierung der Sensorspannung $U_S$ einen Genauigkeitsgewinn.

Schließlich gehen die Toleranzen und die Temperaturabhängigkeiten der Restspannung des Strombegrenzers 2 und des Schalters 3 nicht als Meßfehler ein, da sie vom Regler 6 ausgeregelt werden.

## Patentansprüche

1. Ansteuerschaltung für einen induktiven Sensor (1), wobei der Sensor (1) in einer Meßphase ($t_0$—$t_2$) mit einem Stromimpuls beaufschlagt wird, mit einer Spannungsquelle (10), die während der Meßphase ($t_0$—$t_2$) über einen von einem Mikrocomputer (5) gesteuerten Schalter (3) und über eine Strombegrenzung (2) an den Sensor (1) gelegt wird, und mit einer Schaltung zur Auswertung der Stromanstiegszeit am Sensor (1), gekennzeichnet durch folgende Merkmale:

a) die Spannungsquelle (10) ist steuerbar ausgebildet;

b) die Spannung $U_S$ am Sensor (1) wird über eine Rückführungsleitung (11) zum Steuereingang der Spannungsquelle (10) geleitet;

c) die Spannung $U_S$ am Sensor (1) ist nur während des ersten Teiles ($t_0$—$t_1$) der Meßphase, zwischen dem Öffnen der Schalbers (3) und dem Einsetzen der Strom begrenzung (2), auf einen konstanten Wert regelbar.

2. Ansteuerschaltung nach Anspruch 1, dadurch gekennzeichnet, daß zur Auswertung der Stromanstiegszeit am Sensor (1) ein Komparator (4) vorgesehen ist, dessen nicht invertierter Eingang (7) über einen Spannungsteiler (9, 15) an der Spannungsquelle (10) liegt, dessen invertierter Eingang (8) über einen Schalter (3) am Sensor (1) liegt, und dessen Ausgang (12) am Mikrocomputer (5) liegt.

3. Ansteuerschaltung nach einem der Ansprüche 1 bis 2, dadurch gekennzeichnet, daß zur Auswertung weiterer Sensoren (1') lediglich der Schalter (3') und eine Abschaltbegrenzung (13', 14') mehrfach vorhanden sind.

## Revendications

1. Circuit de commande pour un capteur inductif (1), dans lequel une impulsion de courant est appliquée au capteur (1) dans une phase de mesure ($t_0$—$t_2$), comprenant une source de tension (10) qui est connectée au capteur (1), pendant la phase de mesure ($t_0$—$t_2$), à travers un interrupteur (3) commandé par un micro-ordinateur (5) et à travers un limiteur de courant (2), ainsi qu'un civcuit pour l'exploitation du temps de montée du courant sur le capteur (1), caractérisé en ce que:

a) la source de tension (10) est réalisée de manière qu'elle puisse être commandée;

b) la tension $U_S$ sur le capteur (1) est appliquée par une ligne de réaction (11) à l'entrée de commande de la source de tension (10); et

c) la tension $U_S$ sur le capteur (1) est seulement réglable à une valeur constante pendant la première partie ($t_0$—$t_1$) de la phase de mesure, entre l'ouverture de l'interrupteur (3) et l'entrée en action du limiteur de courant (2).

2. Circuit de commande selon la revendication 1, caractérisé en ce que, pour l'exploitation du temps de montée du courant sur le capteur (1), on a prévu un comparateur (4) dont l'entrée non inversée (7) est reliée à travers un diviseur de tension (9, 15) à la source de tension (10), dont l'entrée inversée (8) est reliée à travers un interrupteur (3) au capteur (1) et dont la sortie (12) est connectée au micro-ordinateur (5).

3. Circuit de commande selon la revendication 1 ou 2, caractérisé en ce que, pour l'exploitation de capteurs (1') supplémentaires, seuls l'interrupteur (3') et un limiteur de coupure (13', 14') sont prévus en plusieurs exemplaires.

**Claims**

1. A control circuit for an inductive sensor (1), in which the sensor has a current pulse applied to it in a measuring phase ($t_0$ to $t_2$), the control circuit including a voltage source (10), which during the measuring phase ($t_0$ to $t_2$) is applied by way of a switch (3) controlled by a microcomputer (5) and by way of a current limiter (2) to the sensor (1), and a circuit for evaluating the current rise time at the sensor (1), characterized by the following features:

a) the voltage source (10) is constructed to be controllable;

b) the voltage $U_S$ at the sensor (1) is passed by way of a return line (11) to the control input of the voltage source (10);

c) the voltage $U_S$ at the sensor (1) is controllable to a constant value only during the first part ($t_0$ to $t_1$) of the measuring phase, between the opening of the switch (3) and the operation of the current limiter (2).

2. A control circuit according to claim 1, characterized in that to evaluate the current rise time at the sensor (1) there is provided a comparator (4), the non-inverting input (7) of which is connected by way of a voltage divider (9, 15) to the voltage source (10), and the inverting input (8) of which is connected by way of a switch (3) to the sensor (1), and the output (12) of which is applied to the microcomputer (5).

3. A control circuit according to one of claims 1 to 2, characterized in that to evaluate further sensors (1'), only the switch (3') and a cut-off limiter (13', 14') are present in multiples.

## Fig. 1

## Fig. 2

a)

OUT(16)

$t_0$

b)

U

$U_E$

$U_R$

$U_S$

$t_0$        $t_1$

c)

i

Imax

$t_0$        $t_1$

d)

IN(12)

$t_0$        $t_2$